# EUROPÄISCHE PATENTSCHRIFT

(11) **EP 0 714 516 B1**
(45) Veröffentlichungstag und Bekanntmachung des Hinweises auf die Patenterteilung: **04.08.1999**
(21) Anmeldenummer: 95917904.5
(22) Anmeldetag: 12.05.1995
(51) Int. Cl.: G01P 1/00

(54) **BEFESTIGUNGSVORRICHTUNG UND VERFAHREN ZUR BEFESTIGUNG EINES AUFNAHMEELEMENTS AN EINEM BAUTEIL**
ATTACHMENT DEVICE AND METHOD OF ATTACHING A MEASURING ELEMENT TO A COMPONENT
DISPOSITIF ET PROCEDE POUR FIXER UN ELEMENT DE MESURE A UN COMPOSANT

(30) Priorität: 16.06.1994 DE 4420937
(43) Veröffentlichungstag der Anmeldung: 05.06.1996
(73) Patentinhaber: ROBERT BOSCH GMBH, 70442 Stuttgart (DE)
(72) Erfinder: BAUMANN, Rudolf, D-71701 Schwieberdingen (DE); LACK, Stefan, D-70469 Stuttgart (DE); SCHMID, Karl-Heinz, D-74354 Besigheim (DE); ULLMANN, Thomas, D-71522 Waldrems (DE); KULL, Bernhard, D-73630 Remshalden (DE); SCHAFFER, Wolfram, D-71679 Asperg (DE); HERDERICH, Hans-Jürgen, D-71394 Kernen i.R. (DE)
(86) Internationale Anmeldenummer: DE9500634
(87) Internationale Veröffentlichungsnummer: WO9534821

(56) Entgegenhaltungen:
- FR-A- 2 678 063
- GB-A- 2 225 398

## Beschreibung

### Stand der Technik

Die Erfindung geht aus von einer Befestigungsvorrichtung und einem Verfahren zur Befestigung eines Aufnahmeelements an einem Bauteil nach der Gattung der unabhängigen Ansprüche. In der Praxis werden bisher Drehzahlfühler mit Hilfe von Schraubverbindungen an Bauteilen befestigt. Hierzu ist zum Beispiel im Gehäuse des Bauteils eine Metallbuchse eingespritzt. Der Drehzahlfühler weist dann entsprechende Flansche oder Fortsätze auf, in denen Bohrungen ausgebildet sind. Die Befestigungsschrauben ragen durch die Bohrungen und sind in im Bauteil ausgebildeten Gewinden eingeschraubt. Diese Vorrichtung baut aber relativ aufwendig und ist teuer.

Ferner sind in der Praxis auch Lösungen mit Hilfe eines Blechhalters und einer daran ausgebildeten Formfeder bekannt. Hierbei ist aber im Blechhalter eine Nut ausgebildet. Der Sensor wird in diese Nut eingesetzt und in Richtung der Feder unter diese eingeschoben. Hierbei ist aber zusätzlicher Bauraum notwendig, um das Sensorelement entsprechend zu verschieben.

Aus GB-A-2 225 398 ist eine Lösung bekannt, wobei ein am Sensor angebrachter Flansch in eine Öffnung des Bauteil gedreht wird. In FR-A-2 678 063 wird eine Befestigungsvorrichtung beschrieben, in welcher ein Formfeder über dem Sensorelement an Fortsätze am Bauteil angebracht wird.

### Vorteile der Erfindung

Die erfindungsgemäße Befestigungsvorrichtung und das erfindungsgemäße Verfahren zur Befestigung eines Aufnahmeelements an einem Bauteil ermöglicht es, auch bei beengten Raumverhältnissen einen Sensor an ein Bauteil ein- und auszubauen. Es sind keine seitlichen Verschiebungen notwendig. Die Bohrung im Bauteil braucht nur die Größe des Aufnahmeelements aufzuweisen. Ferner sind keine Schrauben, oder Metallbuchsen notwendig. Das Anbringen von Muttern oder Gewindebohrungen erübrigt sich. Mit Hilfe der Befestigungsfedern und der Flansche am Aufnahmeelement ist eine schnelle, kostengünstige Montage und auch Demontage bei Austausch des Aufnahmeelements möglich. Durch die Anlaufschrägen am Flansch kann der Sensor nur in einer Richtung eingebaut werden. Dies ist wichtig, um den Abgang des Kabels und die Lage der Polschneide, wenn es sich um einen induktiven Sensor als Aufnahmeelement handelt, für eine Serienfertigung einheitlich zu fixieren. Die Bohrung im Bauteil zentriert zugleich den Sensor. Dadurch wird auch gleichzeitig der Abstand vom Pol des induktiven Sensors zum überwachenden Element genau festgelegt. Durch einen Dichtring, der zwischen dem Bauteil und den beiden Flanschen des Aufnahmeelements angeordnet sein kann, kann die Bohrung abgedichtet werden.

Durch die in den abhängigen Ansprüchen aufgeführten Merkmale und Maßnahmen sind vorteilhafte Weiterbildungen der in den unabhängigen Ansprüchen angegebenen Befestigungsvorrichtung bzw. Verfahren möglich.

### Zeichnung

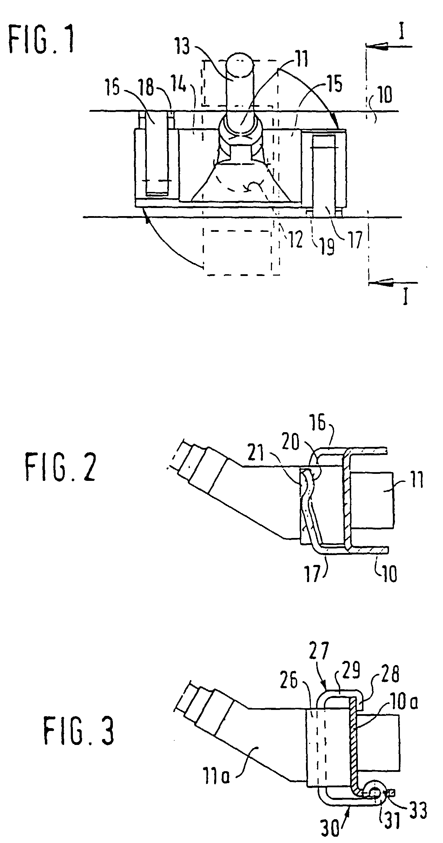

Ein Ausführungsbeispiel der Erfindung ist in der Zeichnung dargestellt und in der nachfolgenden Beschreibung näher erläutert. Es zeigen die Figur 1 eine Draufsicht auf ein im Bauteil befestigtes Aufnahmeelement, wobei mit gestrichelten Linien die Stellung des Aufnahmeelements vor der Befestigung dargestellt ist, Figur 2 eine Seitenansicht in Schnittrichtung I-I nach Figur 1 und Figur 3 einen Schnitt durch eine Abwandlung des Ansführungsbeispiels.

### Beschreibung der Ausführungsbeispiele

In der Figur 1 ist mit 10 ein Bauteil bezeichnet, in dem ein Meßelement 11 angeordnet ist. Bei dem Bauteil 10 kann es sich zum Beispiel um einen Blechhalter eines Radlagers handeln. Es kann aber auch ein Achsschenkel einer Lenkung eines Fahrzeugs sein. Das Meßelement 11 kann als Drehzahlsensor ausgebildet sein, der zum Beispiel nach dem induktiven Prinzip arbeitet. Hierzu besteht der Drehzahlsensor aus einem von einer Meßspule umgebenen Polkern, an den sich ein Permanentmagnet anschließt. Wird an dem Polkern zum Beispiel ein Zahnrad vorbeibewegt, so wird ein Meßsignal erzeugt, das mit Hilfe des Kabels 13 zu einer Auswerteschaltung geleitet wird. Zur Aufnahme des Meßelements 11 weist das Bauteil 10 eine Bohrung 12 auf, in die das Meßelement 11 eingesetzt ist. Ferner hat das Meßelement 11 einen zweiseitigen Flansch 14, 15, d.h. es hat zwei gegenüberliegend ausgebildete Fortsätze. Diese Flansche 14, 15 weisen jeweils eine Anlaufschräge auf, wobei die Steigung aber gegensinnig verläuft. Dadurch wird gewährleistet, daß das Aufnahmeelement 11 nur in einer Richtung im Bauteil 10 einbaubar ist. Die Unterseite der Flansche 14, 15 ist eben ausgebildet, bzw. ist korrespondierend zur Oberfläche des Bauteils 10.

Das Bauteil 10 weist zwei Haltefedern 16, 17 auf. Die Anlaufschrägen der Flansche 14, 15 können sich nur im Bereich der Haltefedern 16, 17 befinden, oder auch über die gesamte Länge der Flansche ausgebildet sein. Diese Haltefedern 16, 17 sind in dem in der Zeichnung dargestellten Ausführungsbeispiel aus dem Bauteil 10 herausgestanzt, so daß jeweils ein Loch 18, 19 im Bauteil 10 entsteht. Die Haltefedern 16, 17 sind parallel zueinander ausgerichtet, und ihre jeweiligen freien Enden weisen in entgegengesetzte Richtungen. Wie aus der Figur 2 ersichtlich ist, weisen die Haltefedern 16, 17 im Bereich der freien Enden eine Sicke 21 auf. Mit dieser Sicke 21 greift die jeweilige Haltefeder 16, 17 in eine im jeweiligen Flansch 14, 15 ausgebildete Mulde 20 ein. Dadurch wird sowohl das Aufnahmeelement 11 im Bauteil 10 in seiner Position zentriert, als auch im Sinne einer Sicherung fixiert. Durch die Ausbildung eines zweiseitigen Flansches und die Verwendung von zwei sich gegensinnig öffnenden Haltefedern 16, 17 wird diese Sicherung noch verbessert. Die Haltefedern 16, 17 können aber auch am Bauteil angeschweißt oder angenietet sein. Die jeweilige Anbringung der Haltefedern 16, 17 ist vom Material des Bauteils 10 abhängig.

Zur Befestigung des Aufnahmeelements 11 im Bauteil 10 wird das Aufnahmeelement 11 in die Bohrung 12 eingesetzt. Dabei sind die Flansche 14, 15 parallel zu den Haltefedern 16, 17 ausgerichtet. Diese Stellung ist in der Figur 1 in gestrichelten Linien eingezeichnet. Selbstverständlich können je nach den vorhandenen Raumverhältnissen die Flansche 14, 15 auch schräg zu den Haltefedern 16, 17 ausgerichtet sein.

Anschließend wird nun das Aufnahmeelement 11 gedreht, so daß die Flansche 14, 15 unter die Haltefedern 16, 17 geführt werden, bis die Sicke 21 der jeweiligen Haltefeder 16, 17 in den Mulden 20 einrasten. Hierbei ist darauf zu achten, daß die Flansche 14, 15 in Richtung der ansteigenden Schrägen unter die Haltefedern 16, 17 geschoben werden. Dadurch kann das Aufnahmeelement 11 nur in einer Richtung eingebaut werden, so daß ein einheitlicher Kabelabgang und eine einheitliche Lage der Polschneide eines als induktiven Sensor ausgebildeten Aufnahmeelements gewährleistet wird.

Beim Ausführungsbeispiel nach der Figur 3 sind die Haltefedern am Flansch 26 des Meßelements 11a. Dies bedeutet, daß eine erste Haltefeder 27 gebogen ausgebildet ist und vor allem einen klammerartigen Umgriff 28 aufweist, mit dem die Haltefeder 27 unter das Bauteil 10a greifen kann. Das Zwischenstück 29 zwischen Flansch 26 und Umgriff 28 der Haltefeder 27 kann gebogen oder, wie in der Figur 3 dargestellt, gewinkelt ausgebildet sein. Der Flansch 26 weist diametral gegenüberliegend eine zweite Haltefeder 30 auf, die am Ende einen Schnapphaken 31 aufweist. Die Haltefedern 27, 30 können als einteiliges Bauteil oder als zwei Teile in den aus Kunststoff bestehenden Flansch 26 eingespritzt sein. Bei den Schnapphaken 31 handelt es sich um ein gerolltes oder geknicktes Ende der Haltefeder 30 mit dem die Haltefeder 30 in eine Aussparung 33 am Bauteil 10a eingreift. Sind am Meßelement 11a zwei diametral gegenüberliegende Flansche ausgebildet, so sind die Flansche und die Haltefedern gleich ausgebildet. Bei der Befestigung des Meßelements 11a am Bauteil 10a wird zuerst das Meßelement 11a in die Bohrung 12 des Bauteils 10a eingesetzt. Durch leichtes Verkanten wird die Haltefeder 27 mit dem Umgriff 28 unter das Bauteil 10a gebracht. Anschließend greift der Schnapphaken 31 der Haltefeder 30 in die Aussparung 33 des Bauteils 10a ein, so daß aufgrund der mechanischen Spannungen der beiden Haltefedern 27, 30 das Meßelement 11a fest auf dem Bauteil 10a aufsitzt. Aufgrund der Ausbildung des Schnapphakens 31 kann dieser wieder aus der Aussparung 33 entfernt werden und somit das Meßelement 11a vom Bauteil 10a gelöst werden. Auch bei diesem Ausführungsbeispiel ist ein Einbau nur in einer Richtung möglich.

## Patentansprüche

1. Befestigungsvorrichtung bestehend aus einem ein Meßsignal erzeugendes Aufnahmeelement (11) und einem Bauteil (10), an dem das Aufnahmeelement (11) befestigt ist, wobei das Aufnahmeelement (11) mindestens einen an seinem Gehäuse ausgebildeten Flansch (14, 15) aufweist, und wobei das Bauteil (10) eine durchgehende Bohrung (12) und mindestens eine Haltefeder (16, 17) aufweist, und wobei das Aufnahmeelement (11) im befestigten Zustand in der Bohrung (12) angeordnet ist und der mindestens eine Flansch (14, 15) unter der mindestens einen Haltefeder (16, 17) eingeklemmt ist.

2. Verfahren zur Befestigung eines mindestens einen Flansch aufweisenden Aufnahmeelements (11) an einem eine durchgehende Bohrung (12) und mindestens eine Haltefeder (16, 17) aufweisenden Bauteil (10), wobei das . Aufnahmeelement (11) so in die durchgehende Bohrung (12) des Bauteils (10) eingesetzt wird, daß der mindestens eine Flansch (14, 15) des Aufnahmeelements (11) sich vor denz freien Ende der mindestens einen Haltefeder (16, 17) befindet, und daß der mindestens eine Flansch (14, 15) des Aufnahmeelements (11) durch eine Drehbewegung des Aufnahmeelements (11) unter die mindestens eine Haltefeder (16, 17) geschoben wird, so daß das Aufnahmeelement (11) am Bauteil (10) fixiert ist.

3. Verfahren nach Anspruch 2, dadurch gekennzeichnet, daß der mindestens eine Flansch (14, 15) vor der Drehbewegung parallel zur mindestens einen Haltefeder (16, 17) ausgerichtet ist.

4. Befestigungsvorrichtung bzw. Verfahren nach einem der Ansprüche 1 bis 3, dadurch gekennzeichnet, daß das Bauteil (10) zwei diagonal gegenüberliegende Haltefedern (16, 17) aufweist, und daß das Aufnahmeelement (11) zwei diametral gegenüberliegende Flansche (14, 15) aufweist.

5. Befestigungsvorrichtung bzw. Verfahren nach einem der Ansprüche 1 bis 4, dadurch gekennzeichnet, daß die Flansche (14, 15) eine ansteigende Schräge aufweisen und daß die Schrägen gegensinnig verlaufen.

6. Befestigungsvorrichtung bzw. Verfahren nach einem der Ansprüche 1 bis 5, dadurch gekennzeichnet, daß die Haltefedern (16, 17) im Bereich des freien Endes eine Sicke (21) aufweisen, die im befestigten Zustand in eine Mulde (20) des jeweiligen Flansches (14, 15) eingreift.

7. Befestigungsvorrichtung bzw. Verfahren nach einem der Ansprüche 1 bis 6, dadurch gekennzeichnet, daß das Aufnahmeelement (11) ein induktiver Drehzahlfühler ist.

8. Befestigungsvorrichtung bzw. Verfahren nach einem der Ansprüche 1 bis 7, dadurch gekennzeichnet, daß die Haltefedern (16, 17) aus dem Bauteil (10) ausgestanzt sind.

9. Befestigungsvorrichtung bestehend aus einem ein Meßsignal erzeugendes Aufnahmeelement (11a) und einem Bauteil (10a), an dem das Aufnahmeelement (11a) befestigt ist, wobei das Aufnahmeelement (11a) mindestens einen an seinem Gehäuse ausgebildeten Flansch (26) aufweist, wobei das Bauteil (10a) eine durchgehende Bohrung (12) hat, wobei an dem mindestens einen Flansch (26) mehrere Haltefedern (27, 30) ausgebildet sind, und wobei das Aufnahmeelement (12a) im befestigten Zustand in der Bohrung (12) angeordnet ist und die mindestens eine erste Haltefeder (27) das Bauteil (10a) umgreift und mindestens eine zweite Haltefeder (30) in eine Ausnehmung (33) des Bauteils (10a) eingreift.

10. Befestigungsvorrichtung nach Anspruch 11, dadurch gekennzeichnet, daß die erste Haltefeder (27) einen Fortsatz (28) hat, der unter das Bauteil (10a) ragt, und daß die zweite Haltefeder (30) einen Schnapphaken (31) aufweist.

11. Befestigungsvorrichtung bzw. Verfahren nach einem der Ansprüche 1 bis 10, dadurch gekennzeichnet, daß das Bauteil (10) ein Halter aus Blech ist.

12. Befestigungsvorrichtung bzw. Verfahren nach Anspruch 11, dadurch gekennzeichnet, daß der Halter Teil eines Radlagers ist.

## Claims

1. Fastening device comprising a receiving element (11), which produces a measuring signal, and a component (10) on which the receiving element (11) is fastened, the receiving element (11) having at least one flange (14, 15) formed on its housing, and the component (10) having a through hole (12) and at least one retaining spring (16, 17), and the receiving element (11), in the fastened state, being arranged in the hole (12), and the at least one flange (14, 15) being clamped below the at least one retaining spring (16, 17).

2. Method for fastening a receiving element (11), which has at least one flange, on a component (10), which has a through hole (12) and at least one retaining spring (16, 17), the receiving element (11) being inserted into the through hole (12) of the component (10) in such a manner that the at least one flange (14, 15) of the receiving element (11) is situated in front of the free end of the at least one retaining spring (16, 17), and that the at least one flange (14, 15) of the receiving element (11) is pushed, by a rotational movement of the receiving element (11), under the at least one retaining spring (16, 17) so that the receiving element (11) is fixed on the component (10).

3. Method according to Claim 2, characterized in that the at least one flange (14, 15) is aligned parallel to the at least one retaining spring (16, 17) before the rotational movement.

4. Fastening device and method according to one of Claims 1 to 3, characterized in that the component (10) has two diagonally opposite retaining springs (16, 17), and in that the receiving element (11) has two diametrically opposite flanges (14, 15).

5. Fastening device and method according to one of Claims 1 to 4, characterized in that the flanges (14, 15) have a rising slope and in that the slopes run in an opposite direction.

6. Fastening device and method according to one of Claims 1 to 5, characterized in that the retaining springs (16, 17) have, in the region of the free end, a bead (21) which in the fastened state engages into a cavity (20) of the respective flange (14, 15).

7. Fastening device and method according to one of Claims 1 to 6, characterized in that the receiving element (11) is an inductive speed sensor.

8. Fastening device and method according to one of Claims 1 to 7, characterized in that the retaining springs (16, 17) are punched out of the component (10).

9. Fastening device comprising a receiving element (11a), which produces a measuring signal, and a component (10a) on which the receiving element (11a) is fastened, the receiving element (lla) having at least one flange (26) formed on its housing, the component (10a) having a through hole (12), a plurality of retaining springs (27, 30) being formed on the at least one flange (26), and the receiving element (12a), in the fastened state, being arranged in the hole (12) and the at least one first retaining spring (27) engaging around the component (10a), and at least one second retaining spring (30) engaging in a recess (33) of the component (10a).

10. Fastening device according to Claim 9, characterized in that the first retaining spring (27) has an extension (28) which protrudes under the component (10a), and in that the second retaining spring (30) has a snap-in hook (31).

11. Fastening device and method according to one of Claims 1 to 10, characterized in that the component (10) is a retainer made of sheet metal.

12. Fastening device and method according to Claim 11, characterized in that the retainer is part of a wheel bearing.

## Revendications

1. Dispositif de fixation, consistant en un élément d'enregistrement (11) qui produit un signal de mesure, et une pièce constitutive (10), sur laquelle est fixé l'élément d'enregistrement (11), l'élément d'enregistrement (11) présentant au moins une bride (14, 15) constituée sur son boîtier, et la pièce constitutive (10) présentant un alésage (12), allant de bout en bout, et au moins un ressort de retenue (16, 17), et l'élément d'enregistrement (11) en position fixée étant disposé dans l'alésage (12) et l'une au moins des brides (14, 15) étant serrée sous au moins l'un des ressort de retenue (16, 17).

2. Procédé servant à fixer un élément d'enregistrement (11) pourvu au moins d'une bride, sur une pièce constitutive (10) qui présente un alésage (12), allant de bout en bout, et au moins un ressort de maintien (16, 17), l'élément d'enregistrement (11) étant inséré dans l'alésage (12), allant de bout en bout, de la pièce constitutive (10), de telle sorte que l'une au moins des brides (14, 15) de l'élément d'enregistrement (11) se trouve devant l'extrémité libre d'au moins l'un des ressorts de retenue (16, 17), et l'une au moins des brides (14, 15) de l'élément d'enregistrement (11) est poussée sous l'un au moins des ressorts de retenue (16, 17), de telle sorte que l'élément d'enregistrement (11) est fixé sur la pièce constitutive (10).

3. Procédé selon la revendication 2,
caractérisé en ce que
l'une au moins des brides (14, 15) est alignée avant le mouvement de rotation en parallèle à au moins l'un des ressorts de retenue (16, 17).

4. Dispositif de fixation ou procédé selon l'une des revendications 1 à 3,
caractérisé en ce que
• la pièce constitutive (10) présente deux ressorts de retenue (16, 17) diagonalement opposés, et
• l'élément d'enregistrement (11) présente deux brides diamétralement opposées (14, 15).

5. Dispositif de fixation ou procédé selon l'une des revendications 1 à 4,
caractérisé en ce que
• les brides (14, 15) présentent un chanfrein montant et
• les chanfreins s'étendent en sens contraire.

6. Dispositif de fixation ou procédé selon l'une des revendications 1 à 5,
caractérisé en ce que
les ressorts de retenue (16,17) présentent dans la zone de leur extrémité libre une moulure (21), qui vient en prise en position fixée dans une cavité (20) de la bride correspondante (14, 15).

7. Dispositif de fixation ou procédé selon l'une des revendications 1 à 6,
caractérisé en ce que
l'élément d'enregistrement (11) est un capteur à induction de vitesse de rotation.

8. Dispositif de fixation ou procédé selon l'une des revendications 1 à 7,
caractérisé en ce que
les ressorts de retenue (16, 17) sont estampés à partir de la pièce constitutive (10).

9. Dispositif de fixation consistant en un élément d'enregistrement (11a) qui produit un signal de mesure, et en une pièce constitutive (10a), sur laquelle est fixé l'élément d'enregistrement (11a), l'élément d'enregistrement (11a) présentant au moins une bride (26) constituée sur son boîtier, la pièce constitutive (10a) ayant un alésage (12), qui va de bout en bout, plusieurs ressorts de retenue (27, 30) étant constitués sur l'une au moins des brides (26) et l'élément d'enregistrement (12a) étant disposé en position fixée dans l'alésage (12) et un premier ressort de retenue (27) au moins entqurant la pièce constitutive (10a) et au moins un second ressort de retenue (30) venant en prise dans un évidement (33) de la pièce constitutive (10a).

10. Dispositif de fixation selon la revendication 9,
caractérisé en ce que
• le premier ressort de retenue (27) a un prolongement (28) qui fait saillie sous la pièce constitutive (10a) et
• le deuxième ressort de retenue (30) présente un crochet d'encliquetage (31).

11. Dispositif de fixation ou procédé selon l'une des revendications 1 à 10,
caractérisé en ce que
la pièce constitutive (10) est un support en tôle.

12. Dispositif de fixation ou procédé selon la revendication 11,
caractérisé en ce que
le support fait partie d'un palier de roue.
